# EUROPÄISCHE PATENTANMELDUNG

(11) **EP 1 508 745 A2**
(43) Veröffentlichungstag der Anmeldung: **23.02.2005**
(21) Anmeldenummer: 04019459.9
(22) Anmeldetag: 17.08.2004
(51) Int. Cl.: F23L 9/02, F23L 7/00, F23G 5/14

(54) **Verfahren zur NOx-Minderung in Feuerräumen und Vorrichtung zur Durchführung des Verfahrens**

(30) Priorität: 22.08.2003 DE 10339133
(71) Anmelder: Fisia Babcock Environment GmbH, 51643 Gummersbach (DE)
(72) Erfinder: Priesmeier, Ulrich, Dr.-Ing., 51643 Gummersbach (DE); Schäfers, Walter, Dr.-Ing., 51674 Wiehl (DE); Maghon, Thomas, Dr.-Ing., 51643 Gummersbach (DE); Warnecke, Ragnar, Dr.-Ing., 97279 Prosselsheim (DE)
(74) Vertreter: Lüdtke, Frank

(57) **Zusammenfassung**

Die Erfindung betrifft ein Verfahren zur NOx-Minderung in Feuerräumen (1) von üblicherweise als Rostfeuerung mit zusätzlicher Sekundärluft bezeichneten Feststoffeuerungen, insbesondere in Müllverbrennungsanlagen, bei denen der zugeführte Brennstoff (2) auf einem von Primärluft (3) durchströmten, mechanisch bewegten Rost (4) durch den Feuerraum transportiert wird und der Brennstoff auf dem Rost ein Brennbett (5) bildet, in dem partiell noch brennbare Gase (6) mit reduzierbaren und mit oxidierbaren gasförmigen Stickstoffverbindungen erzeugt werden, und wo die gesamten Gase aus dem Brennbett im Übergang zum sogenannten Ausbrandraum (1b) des Feuerraums mindestens eine Sekundärluftmischzone (8) passieren, in die zur vollständigen Oxidation der Gase Sekundärluft (7) eingedüst wird, wobei
durch Eindüsen von zusätzlichen Mischstrahlen (15) in den Gasraum (1b) zwischen Brennbett (5) und Sekundärluftmischzone (8) zumindest eine zusätzliche Mischzone (14) erzeugt wird, innerhalb der eine angemessene Durchmischung der Stickstoffverbindungen (oxidierbare und reduzierbare) mit den Feuerungsgasen erfolgt.

## Beschreibung

Die Erfindung betrifft ein Verfahren zur NOₓ-Minderung in Feuerräumen entsprechend dem Oberbegriff des ersten Patentanspruches und eine Vorrichtung zur Durchführung des Verfahrens.
Das Verfahren ist überall dort einsetzbar, wo Feuerräume vorhanden sind, in denen sich Mischzonen ausbilden. Das sind insbesondere Feuerräume von Verbrennungsanlagen, in denen der Müll, Hausmüll, Gewerbemüll, Holz, Ersatzbrennstoffe etc. auf einem Vorschubrost durch einen Feuerraum transportiert wird und Sekundärluft in den Feuerraum eingedüst wird, so dass eine Mischzone für Gase über dem Müll vorhanden ist.
Feuerräume für Müll sind als so genannte Müllverbrennungsanlagen bekannt. In den Feuerräumen ist ein Rost angeordnet, auf das der Brennstoff, im vorliegenden Fall der Müll, aufgegeben wird.

Bei diesen Feuerungen wird der zugeführte Brennstoff auf einem von der Primärluft durchströmten, mechanisch bewegten Rost durch den Feuerraum transportiert und bildet dabei ein Brennbett. In diesem Brennbett durchläuft jedes Brennstoffpartikel für sich die für die Feststoffverbrennung typischen und zur Veraschung führenden Teilschritte, nämlich Aufheizung, Trocknung, Entgasung, Vergasung, Kohlenstoffabbrand und zuletzt die Ascheabkühlung in der genannten zeitlichen Reihenfolge während des Transports von der Brennstoffaufgabe bis zum Schlackeabwurf. Hierbei ist es unerheblich, ob das Feuerungskonzept der Anlage als Gegenstrom-, Mittelstrom-, oder Gleichstromfeuerung ausgelegt ist und ob die Anlage mit einem Vorschubrost, Rückschubrost, Wanderrost oder Walzenrost ausgestattet ist. Die Geschwindigkeit der oben genannten Teilschritte der Feststoffverbrennung hängt hauptsächlich von der Zusammensetzung und der Stückgröße des Brennstoffs, der zugeführten Primärluft und den Temperaturen im Feuerraum ab.
Durch die physikalischen und chemischen Prozesse im Brennbett werden Abgase mit lokal bzw. zeitlich unterschiedlicher Zusammensetzung erzeugt, die partiell noch brennbare Gase und unter anderem auch gasförmige reduzierbare Stickstoffverbindungen z.B. NO und oxidierbare Stickstoffverbindungen z.B. NH3 enthalten. Die brennbaren Gase bilden die sichtbaren Flammen im Feuerraum oberhalb des Brennbetts.
Im Übergang zum sogenannten Ausbrandraum wird Sekundärluft zur vollständigen Oxidation der Gasphase in eine oder mehrere Sekundärluftmischzonen eingedüst. Man findet gelegentlich auch eine zusätzliche Eindüsung von rezirkuliertem Abgas, die aus strömungstechnischen und/oder wärmetechnischen Gründen erfolgt. Die Ausführungsbestimmung zur 17.BimSchV verlangt für den Ausbrandraum eine gleichmäßige Sauerstoffkonzentration von mehr als 6 Vol% und eine Verweilzeit von 2 Sekunden bei Temperaturen über 850°C stromab der letzten Lufteindüsung. Aus DE 196 48 934 C2 ist ein Verfahren bekannt, mit dem durch die erfindungsgemäße Eindüsung eine besonders gleichmäßige Sauerstoff- und Temperaturverteilung erreicht wird.

Nach Stand des Wissens wird Stickoxid NO innerhalb des Brennbetts sowie im Feuerraum oberhalb des Brennbetts bei der chemischen Umsetzung von stickstoffhaltigen Brennstoffbestandteilen sowie bei Temperaturen oberhalb von 1200°C aus dem Luftstickstoff gebildet. Allgemein wird davon ausgegangen, daß die NO-Bildung am Austritt aus der Sekundärluftmischzone abgeschlossen ist.
Um den geltenden Emissionsgrenzwert für Stickoxide (NOx) am Kamin einzuhalten wird gemäß dem Stand der Technik durch Einsatz von Ammoniak (NH3), Harnstoff oder ähnlichen oxidierbaren Stickstoffverbindungen als Reduktionsmittel ein Teil der zuvor gebildeten Stickoxide zu N2 und H2O reduziert. Das Reduktionsmittel wird dazu in den ausreagierten Abgasstrom eingedüst bzw. eingemischt. Im Fall der Selektiven Catalytischen Reaktion (SCR) erfolgt die Eindüsung des Reduktionsmittels nach der Abkühlung der Rauchgase, die chemische Reaktion verläuft dann bei Temperaturen zwischen ca. 250°C und ca. 400°C an einem geeigneten Katalysator. Im Fall der Selektiven Nicht-Catalytischen Reaktion (SNCR) wird das Reduktionsmittel direkt in den Feuerraum eingedüst und in einer Mischzone mit dem Abgas vermischt. Die chemischen Reaktionen laufen bei geeigneter Mischung ohne Katalysator direkt im Ausbrandraum des Feuerraums oberhalb der Sekundärlufteindüsung bei einer Temperatur von ca. 1000°C ab (EXXON-Reaktion). Varianten des SNCR-Verfahrens und Vorrichtungen dazu sind u.a. in den Patentschriften DE 3722523 C1 sowie DE 3811636 C1 und EP 0430144B1 beschrieben.

Nachteilig an der vorhandenen Lösung ist, dass ein intensiver Austausch zwischen dem Gasraum oberhalb der ersten Rostzone, die vorwiegend Trockenschwaden und Schwelgas bzw. Pyrolysegas enthält, und der mittleren Rostzone trotz der Sekundärluftzuführung nur in geringem Maße stattfindet, so daß aus oxidierbaren Stickstoffverbindungen NO entsteht.

Es ist daher Aufgabe der Erfindung die Bildung von NO aus oxidierbaren Stickstoffverbindungen zu vermeiden und bereits gebildetes NO unter Nutzung der im Brennbett freigesetzten oxidierbaren Stickstoffverbindungen als quasi natürlich vorhandenes Reduktionsmittel zu N2 zu reduzieren.

Diese Aufgabe wird durch ein Verfahren nach den Merkmalen des ersten Patentanspruches und eine Vorrichtung zur Durchführung des Verfahrens gelöst.

Die erfindungsgemäße Lösung beruht auf der Vorstellung, daß ein wesentlicher Teil des NO erst innerhalb der Sekundärluftmischzone gebildet wird. Maßgebend für die NO-Bildung sind dabei das Ansaugvermögen, der Mischimpuls und das Sauerstoffangebot der Sekundärluft sowie die Zufuhr von oxidierbaren stickstoffhaltigen Verbindungen aus der Feuerraumzone oberhalb des Brennbetts, die vorwiegend aus den vorderen Zonen des Brennbetts stammen und mangels ausreichender Mischung zuvor nicht zur Reaktion gekommen sind. Diese Vorstellung stützt sich auf die in 2003 durchgeführte Auswertung von Betriebs-Meßdaten ausgeführter Müllverbrennungsanlagen.

Die erfindungsgemäße Lösung besteht nun darin, eine Mischzone im Feuerraum unterhalb und ggf. getrennt von der Sekundärluftmischzone zu realisieren und die Mischung gezielt so zu intensivieren, daß die oxidierbaren Stickstoffverbindungen aus dem Brennbett unter den hierzu günstigen Bedingungen bei einer lokalen Luftzahl λ zwischen ca. 0,7 < λ < ca. 0,9 und Temperaturen von mehr als ca. 1000°C zu N2 umgewandelt werden, bevor sie die Sekundärluftmischzone erreichen und dort zu NO oxidiert werden.

Gemäß Erfindung werden dazu ein bzw. mehrere Mischgaseindüsungen in diesem Feuerraumabschnitt angeordnet. Die Mischgaseindüsung umfaßt die in der Feuerraumbegrenzungswand angeordnete Düse, den zugeführten Massenstrom und den Strahl mit hohem Impuls, der durch die Düse erzeugt wird. Maßgeblich für die Mischwirkung sind dabei der Impulseintrag, d.h. das Ansaugvermögen und die Wurfweite der Mischgasstrahlen sowie deren Anordnung im Feuerraum. Im Unterschied zur Sekundärlufteindüsung ist der Masseneintrag der Mischgasstrahlen ohne bzw. von untergeordneter Bedeutung.
Da die erforderlichen Reaktionspartner in diesem Feuerraumabschnitt bereits vorhanden sind, ist gemäß Erfindung der Einsatz eines inerten Mischgases als Impulsträger ohne zusätzliche Reduktionsmittel vorgesehen. Als inertes Mischgas sind Wasserdampf oder Stickstoff günstig. Druckluft kann als Impulsträger eingesetzt werden, sofern der Sauerstoffeintrag gegenüber der Mischwirkung vernachlässigt werden kann. Auch gereinigtes Rauchgas kann als Mischgas verwendet werden, sofern die technischen Schwierigkeiten der erforderlichen Druckerhöhung gelöst werden.
Zur Optimierung des Verfahrens bzw. zur Anpassung an besondere Feuerungsbedingungen können mit dem Impulseintrag auch Temperatur und Luftzahl lokal beeinflußt werden. Dazu ist als Mischgas eine geeignete Mischung aus inertem Trägergas, einem Sauerstoffträger, einem Brennstoff sowie noch zu verdampfendes Wasser einzusetzen.
In besonderen Fällen kann sich auch eine zusätzliche Dosierung von Reduktionsmittel gemeinsam mit dem Mischgas als günstig erweisen.

Die Vorrichtung zur Durchführung des Verfahrens besteht aus der Verbrennungsanlage mit Rostfeuerung und Primärluftzufuhr sowie dem zur Durchführung des Verfahrens geeigneten Feuerraum mit der Sekundärlufteindüsung und sieht vor, daß mehrere Düsen für die Mischgaseindüsung in den Stirn- und/oder Seitenwänden des Feuerraums unterhalb der Düsen für die Sekundärluft so angeordnet sind, daß die Mischzone im Volumen zwischen Brennbett und Sekundärlufteindüsung realisiert wird und sich in mindestens zwei im Wesentlichen horizontal über dem Brennbett umlaufende Mischwirbel unterteilt.

Das Volumen des Feuerraums zwischen Brennbett und Sekundärlufteindüsung soll so dimensioniert sein, daß die Verweilzeit der Abgase in diesem Raum ca. 0,5 Sekunden beträgt.
Weiterhin ist es vorteilhaft, den Feuerraum so zu gestalten, daß die Stirnwand-Düsen in einer Abwinkelung der Feuerraumwand angeordnet werden können.

Im Folgenden wird die Erfindung an einem Ausführungsbeispiel und einer Figur näher erläutert.

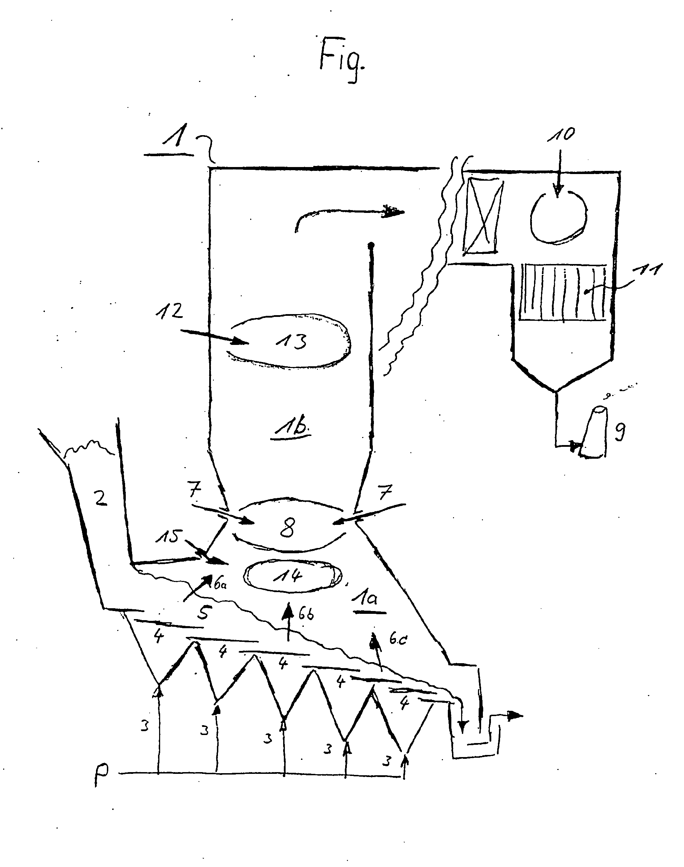

Die Figur zeigt den Feuerraum 1 einer Müllverbrennungsanlage, die mit dem Brennstoff 2, einem Hausmüll, befüllt wird. Der Brennstoff 2 wird über von der Primärluft 3 durchströmte, mechanisch bewegte Roste 4 durch den Feuerraum transportiert, wobei sich ein Brennbett 5 ausbildet. In diesem Brennbett 5 durchläuft jedes Brennstoffpartikel für sich die für die Feststoffverbrennung typischen und zur Veraschung führenden Teilschritte, nämlich Aufheizen, Trocknung, Entgasung, Vergasung, Kohleabbrand und zuletzt die Ascheabkühlung in der genannten zeitlichen Reihenfolge während des Transportes von der Brennstoffaufgabe bis zum Schlackeabwurf. Durch die physikalischen und chemischen Prozesse im Brennbett 5 werden Abgase 6a, 6b, 6c, mit lokal bzw. seitlich unterschiedlicher Zusammensetzung erzeugt, die partiell noch brennbare Gase und unter anderem auch gasförmige reduzierbare Stickstoffverbindungen, beispielsweise NO und oxidierbare Stickstoffverbindungen, beispielsweise NH₃, enthalten. Die brennbaren bilden die sichtbare Flamme im Feuerraum 1 a oberhalb des Brennbettes 5. Im Übergang zum sogenannten Ausbrandraum 1 b wird Sekundärluft 7 zur vollständigen Oxidation der Gasphase in eine oder mehrere Sekundärluftzonen 8 eingedüst. Im Übergang zum so genannten Ausbrandraum 1 b wird Sekundärluft 7 zur vollständigen Oxidation der Gasphase in eine oder mehrere Sekundärluftmischzonen 8 eingedüst. Die gemäß dem Stand der Technik üblichen Maßnahmen zur Einhaltung des Noₓ-Emissionsgrenzwertes am Kamin 9 sind in den Pos. 10 und 11 für das SCR-Verfahren bzw. Pos. 12 und 13 für das SNCR-Verfahren skizziert. Gemäß Anspruch 1 befindet sich unterhalb der Sekundärluftmischzone 8 die intensivierte Mischzone 14, innerhalb der aus dem Brennbettstammende oxidierbare Stickstoffverbindungen und bereits gebildetes Stickstoffmonoxid NO bei einer lokalen Luftzahl zwischen ca. 0,7 und ca. 0,9 und Temperaturen von ca. 1000°C zu molekularem Stickstoff N2 umgewandelt werden, bevor sie die Sekundrluftmischzone erreichen und oxidierbare Stickstoffverbindungen dort zu N oxidiert werden. Die intensivierte Mischzone 14 entsteht durch Strahlen von Mischgas 15, das durch hierfür geeignete Düsen mit hohem Impuls in den betreffenden Feuerraumabschnitt 1 a eingedüst wird. In der Figur sind die Mischgasdüsen beispielsweise in einer Abwinkelung der vorderen Stirnwand des Feuerraums angeordnet. Die Ausführung der Düsen an sich orientiert sich an dem als Impulsträger eingesetzten Mischgas.

Die Erfindung hat den Vorteil, daß die Bildung von NO aus oxidierbaren Stickstoffverbindungen im Feuerraum vermieden wird.

### Liste der verwendeten Bezugszeichen

- 1: Feuerraum
- 1a: Feuerraum zwischen Brennbett und Dekundärlufteindüsung
- 1b: Ausbrandraum oberhalb Sekundärlufteindüsung
- 2: Brennstoff
- 3: Primärluft
- 4: Verbrennungsrost
- 5: Brennbett
- 6a,b,c: Abgase aus dem Brennbett
- 7: Sekundärluft
- 8: Sekundärmischluftzone
- 9: Kamin
- 10: Reduktionsmittel für SCR
- 11: SCR-Katalysator
- 12: Eindüsung in den Feuerungsraum
- 13: SNCR-Mischzone
- 14: Zone intensiver Mischung
- 15: Mischgaseindüsung

## Patentansprüche

1. Verfahren zur NOx-Minderung in Feuerräumen (1) von üblicherweise als Rostfeuerung mit zusätzlicher Sekundärluft bezeichneten Feststoffeuerungen, insbesondere in Müllverbrennungsanlagen, bei denen der zugeführte Brennstoff (2) auf einem von Primärluft (3) durchströmten, mechanisch bewegten Rost (4) durch den Feuerraum transportiert wird und der Brennstoff auf dem Rost ein Brennbett (5) bildet, in dem partiell noch brennbare Gase (6) mit reduzierbaren und mit oxidierbaren gasförmigen Stickstoffverbindungen erzeugt werden, und wo die gesamten Gase aus dem Brennbett im Übergang zum sogenannten Ausbrandraum (1 b) des Feuerraums mindestens eine Sekundärluftmischzone (8) passieren, in die zur vollständigen Oxidation der Gase Sekundärluft (7) eingedüst wird,
**dadurch gekennzeichnet,**
**daß** durch Eindüsen von zusätzlichen Mischstrahlen (15) in den Gasraum zwischen Brennbett (5) und Sekundärluftmischzone (8) zumindest eine zusätzliche Mischzone (14) erzeugt wird, innerhalb der eine angemessene Durchmischung der Stickstoffverbindungen (oxidierbare und reduzierbare) mit den Feuerungsgasen erfolgt, so daß deren Reaktion (unter diesen als günstig angesehenen Bedingungen) im Wesentlichen zu N₂ und H₂O bereits erfolgt ist bevor sie die oxidierbaren Stickstoffverbindungen in die Sekundärluftmischzone bzw. eine der Sekundärluftmischzonen geraten und dort unter den diesbezüglich als ungünstig angesehenen Bedingungen zu NO oxidiert werden.

2. Verfahren nach Anspruch 1, **dadurch gekennzeichnet, daß** die Durchmischung in der Intensivmischzone bei einer lokalen Luftzahl λ zwischen ca. 0,7 < λ < ca. 0,9 und Temperaturen von ca. 1000°C stattfindet.

3. Verfahren nach Anspruch 1 und 2, **dadurch gekennzeichnet, daß** die Eindüsgeschwindigkeit des Mischgasstroms (15) größer ist als diejenige der Sekundärluft (7).

4. Verfahren nach den Ansprüchen 1 bis 3, **dadurch gekennzeichnet, daß** die Eindüsgeschwindigkeit des Mischgasstroms (15) das Vierfache der Eindüsgeschwindigkeit der Sekundärluft (7) beträgt.

5. Verfahren nach den Ansprüchen 1 bis 4 **dadurch gekennzeichnet, daß** an der Mischgasdüse ein überkritisches Druckverhältnis vorliegt und die Eindüsgeschwindigkeit gleich oder größer MACH=1 beträgt.

6. Verfahren nach den Ansprüchen 1 bis 5 **dadurch gekennzeichnet, daß** ein inertes Gas als Impulsträger eingesetzt wird.

7. Verfahren nach den Ansprüchen 1 bis 5 **dadurch gekennzeichnet, daß** Druckluft als Impulsträger eingesetzt wird.

8. Verfahren nach den Ansprüchen 1 bis 5 **dadurch gekennzeichnet, daß** Rauchgas als Impulsträger eingesetzt wird.

9. Verfahren nach den Ansprüchen 1 bis 5 **dadurch gekennzeichnet, daß** ein Gasgemisch aus inertem Trägergas, Sauerstoffträger und Brennstoff als Impulsträger eingesetzt wird.

10. Verfahren nach den Ansprüchen 1 bis 9 **dadurch gekennzeichnet, daß** ein Gemisch aus Gasen und unverdampftem Wasser als Impulsträger eingesetzt wird.

11. Verfahren nach den Ansprüchen 1 bis 5 **dadurch gekennzeichnet, daß** ein Wasserstrahl oder ein Strahl aus Wassertropfen als Impulsträger eingesetzt wird.

12. Verfahren nach den Ansprüchen 1 bis 11, **dadurch gekennzeichnet, daß** die Impulsträger Inertgas und/oder Luft und/oder Rauchgas und/oder Brennstoff und/oder Wasser über separate Düsen getrennt voneinander in den genannten Feuerraum-Abschnitt (1 a) eingedüst werden.

13. Verfahren nach den Ansprüchen 1 bis 12, **dadurch gekennzeichnet, daß** zumindest einer der Impulsträger oxidierbare Stickstoffverbindungen als Reduktionsmittel enthält.

14. Feuerungsanlage zur Durchführung eines Verfahrens nach den Ansprüchen 1 bis 13, **dadurch gekennzeichnet, daß** Düsen für das Mischgas (15) in Stirn- und/oder Seitenwänden des Feuerraumabschnitts (1 a) unterhalb der Sekundärlufteindüsung angeordnet sind.

15. Feuerungsanlage nach Anspruch 14, **dadurch gekennzeichnet, daß** Düsen für das Mischgas (15) in Stirn- und/oder Seitenwänden des Feuerraumabschnitts (1 a) unterhalb der Sekundärlufteindüsung so angeordnet sind, daß mindestens zwei im Wesentlichen horizontal über dem Brennbett gegensinnig umlaufende Mischwirbel gebildet werden.

16. Feuerungsanlage nach den Ansprüchen 14 und 15, **dadurch gekennzeichnet, daß** Düsen für das Mischgas (15) mit geeigneter Durchmesser-Staffelung so in Stirnund/oder Seitenwänden des Feuerraumabschnitts (1a) unterhalb der Sekundärlufteindüsung angeordnet sind, daß ein Wandschleier und mindestens zwei im Wesentlichen horizontal über dem Brennbett gegensinnig umlaufende Mischwirbel gebildet werden.

17. Feuerungsanlage nach den Ansprüchen 14 bis 16, **dadurch gekennzeichnet, daß** die Düsen für das Mischgas (15) als mehrflutige Düsen ausgeführt sind.

18. Feuerungsanlage nach den Ansprüchen 14 bis 17, **dadurch gekennzeichnet, daß** die Düsen für das Mischgas (15) als Zweistoff-Düsen ausgeführt sind.

19. Feuerungsanlage nach den Ansprüchen 14 bis 18, **dadurch gekennzeichnet, daß** das Volumen des Feuerraums zwischen Brennbett und Sekundärlufteindüsung eine Verweilzeit der Abgase in diesem Raum von ca. 0,5 Sekunden erlaubt.

20. Feuerungsanlage nach den Ansprüchen 14 bis 19, **dadurch gekennzeichnet, daß** die Stirnwand-Düsen in einer Abwinkelung der Feuerraumwand angeordnet sind.
